# EUROPÄISCHE PATENTANMELDUNG

(11) **EP 2 236 946 A2**
(43) Veröffentlichungstag der Anmeldung: **06.10.2010**
(21) Anmeldenummer: 10002596.4
(22) Anmeldetag: 12.03.2010
(51) Int. Cl.: F24D 12/02, F24D 19/10

(54) **Verfahren zur Steuerung der Energiezufuhr einer Heizungsanlage mit mehreren möglichen angeschlossenen Energiequellen sowie Steuereinrichtung für eine Heizungsanlage**

(30) Priorität: 20.03.2009 DE 102009013739
(71) Anmelder: Hydrometer GmbH, 91522 Ansbach (DE)
(72) Erfinder: vom Schloß, Edgar, 90574 Roßtal (DE)
(74) Vertreter: Blaumeier, Jörg

(57) **Zusammenfassung**

Verfahren zur Steuerung der Energiezufuhr einer Heizungsanlage mit mehreren möglichen angeschlossenen Energiequellen, wobei wenigstens eine aktuelle, für die Auswahl einer Energiequelle relevante Information ermittelt wird, wonach unter Berücksichtigung der Information wenigstens eine aktuell am besten geeignete Energiequelle ermittelt und verwendet wird.

## Beschreibung

Die Erfindung betrifft ein Verfahren zur Steuerung der Energiezufuhr einer Heizungsanlage mit mehreren möglichen angeschlossenen Energiequellen, insbesondere für eine Heizungsanlage für Wohngebäude, sowie eine Steuereinrichtung für eine Heizungsanlage.

Diskussionen über Rohstoffknappheit und steigende Energiepreise haben eine erhöhte Sensitivität für Energiethemen, sowohl im Hinblick auf Kostengünstigkeit wie auch Umweltfreundlichkeit, zur Folge, so dass auch Privatleute, die bereits eine konventionelle, beispielsweise mit Öl oder Gas betriebene Heizungsanlage besitzen, sich modernen Energiequellen, beispielsweise regenerativen Energien, zuwenden, um diese in ihre Heizungsanlage zu integrieren. Dies gilt insbesondere, da regenerative Energien vom Staat gefördert werden und daher eine große Nachfrage existiert.

Daher existieren zunehmend Heizungsanlagen, bei denen die Wärme über mehrere Energiequellen erzeugt werden kann. Der Benutzer kann dann selbst entscheiden, mit welcher Art von Energie er seine Heizungsanlage aktuell betreiben möchte. Dabei ist es allerdings schwierig, zu entscheiden, welche Energiequelle unter den gewünschten Optimierungsgesichtspunkten, beispielsweise Kosten und Umweltschutz, aktuell gerade tatsächlich die günstigste ist, zudem erfordert das Umschalten einen Aufwand vom Benutzer, der zudem vor Ort sein muss.

Der Erfindung liegt daher die Aufgabe zugrunde, ein Verfahren zur Steuerung der Energiezufuhr einer Heizungsanlage mit mehreren möglichen angeschlossenen Energiequellen anzugeben, welches die genannten Nachteile vermeidet und eine Auswahl von am besten geeigneten Energiequellen ermöglicht.

Zur Lösung dieser Aufgabe ist erfindungsgemäß ein Verfahren zur Steuerung der Energiezufuhr einer Heizungsanlage mit mehreren möglichen angeschlossenen Energiequellen vorgesehen, wobei wenigstens eine aktuelle, für die Auswahl einer Energiequelle relevante Information ermittelt wird, wonach unter Berücksichtigung der Information wenigstens eine aktuell am besten geeignete Energiequelle ermittelt und verwendet wird.

Es wird also vorgeschlagen, durch die Steuereinrichtung der Heizungsanlage, welche insbesondere eine Heizungsanlage eines Wohngebäudes sein kann, selbst relevante Informationen automatisch zu ermitteln, welche automatisch ausgewertet werden können und somit zu einer für den Benutzer möglichst sinnvollen Auswahl wenigstens einer Energiequelle führen. Es wird also vollautomatisch durch die Steuereinrichtung (Controller) entschieden, welche Energiequelle gerade die Geeignetste ist, wobei insbesondere eine Vielzahl von Informationen genutzt werden kann, beispielsweise aus Sensordaten oder auch online abgerufen, wenn eine Verbindung mit einem Netzwerk, insbesondere dem Internet oder beispielsweise auch über GPRS, besteht, so dass objektiv unter Hinzuziehung von Informationen, auf die der Benutzer selber keinen oder nur schwerlich Zugriff hätte, eine optimierte Steuerung erfolgt.

Dabei kann die Information im Hinblick auf wenigstens ein Eignungskriterium ausgewertet werden, insbesondere ein Kostenkriterium und/oder ein Umweltfreundlichkeitskriterium. Es kann mithin - insbesondere durch einen Benutzer eingebbar - festgelegt werden, wohingehend die Optimierung der Auswahl der Energiequelle erfolgen soll, beispielsweise soll immer die aktuell kostengünstigste Wärmeerzeugung ermöglicht werden. Werden mehrere Kriterien verwendet, so kann auch eine Wichtung oder Priorität der Kriterien berücksichtigt werden. Beispielsweise kann zunächst auf Umweltfreundlichkeit geachtet werden, jedoch auch - gegebenenfalls mit geringerer Wichtung oder niedrigerer Priorität - die Kostengünstigkeit mit einbezogen werden.

Konkret kann beispielsweise vorgesehen sein, dass die am besten geeignete Energiequelle durch eine hierarchische Abarbeitung von wenigstens eine Information auswertenden Bedingungen ermittelt wird. Dies ermöglicht eine sehr einfache Realisierung des Auswahlprozesses, bietet aber letztlich weniger Flexibilität. Als Beispiel kann zunächst überprüft werden, ob die Sonne scheint, woraufhin ein Solarkreis zu nutzen wäre. Scheint die Sonne nicht, ist die Luft jedoch warm, kann eine die Außenluft nutzende Wärmepumpe eingesetzt werden. Ist es draußen kalt und dunkel, kann auf die konventionelle Gas-/Ölheizung zurückgegriffen werden.

Mit besonderem Vorteil kann jedoch vorgesehen sein, dass im Rahmen eines Bewertungssystems unter Berücksichtigung der Information für jede Energiequelle ein Eignungswert ermittelt wird und die am besten geeignete Energiequelle anhand der Eignungswerte bestimmt wird. Hierbei werden also verschiedene Kriterien betrachtet bzw. Formeln verwendet, um letztlich für jede Energiequelle einen Eignungswert zu ermitteln, der angibt, wie gut geeignet diese Energiequelle in der aktuellen Situation ist. Beispielsweise kann dabei als Eignungswert eine Art "Energiepreis" berücksichtigt werden, bei dem der aktuelle Preis für alle Energien auf Wärmeerzeugung je Kilowattstunde (kWH) umgerechnet wird, mithin eine Normierung auf Kilowattstunden vorgenommen wird. Es sei an dieser Stelle bereits angemerkt, dass es dabei vorteilhaft ist, auch den aktuellen Wärmebedarf als Information zu berücksichtigen, um festzustellen, ob eine Energiequelle grundsätzlich überhaupt geeignet ist. Die eben erwähnte Normierung, beispielsweise auf Kilowattstunden, stellt eine einfache Vergleichbarkeit der Eignungswerte sicher. Dabei kann im Übrigen vorgesehen sein, dass auch mehrere Energiequellen bestimmt und gleichzeitig verwendet werden können, wobei zweckmäßigerweise deren Anteil an der Heizleistung anhand des Eignungswerts bestimmt wird. Es ist also auch denkbar, parallel mehrere Energiequellen einzusetzen, wenn diese sich vorteilhaft ergänzen, aber auch, wenn eine Energiequelle - beispielsweise Wärmeaustausch mit der Außenluft - nicht in der Lage ist, die gesamte Wärmeerzeugung allein zu bewerkstelligen. Da alle diese Faktoren über die Information in die Bestimmung des Eignungswerts eingehen, kann dieser zur Beanteilung berücksichtigt werden. Vorzugsweise können dabei nur Energiequellen mit einem einen Schwellwert überschreitenden Eignungswert verwendet werden. Selbstverständlich kann dieser Schwellwert selbst wieder von anderen Faktoren abhängig sein, beispielsweise von einem Mittelwert der bestimmten Eignungswerte oder dergleichen.

Allgemein ist zweckmäßigerweise vorgesehen, dass die Ermittlung zyklisch wiederholt wird. Das bedeutet, dass die Steuereinrichtung in kurzen Zeitabständen überprüft, ob die aktuell verwendete Energiequelle noch immer die günstigste für den Benutzer ist, so dass auf Änderungen der relevanten Informationen schnell reagiert werden kann und auch zeitlich eine Verwendung der am besten geeigneten Energiequelle gesichert wird.

Wie bereits erwähnt, sind verschiedene relevante Informationen denkbar, die ermittelt werden können. So kann vorgesehen sein, dass als Information ein die Kosten einer Energiequelle beschreibender Preis, insbesondere zeitabhängig, und/oder eine Zeit, insbesondere eine Uhrzeit, und/oder Messwerte von Sensoren ermittelt werden. Sensoren können dabei insbesondere für diverse Temperaturbestimmungen benutzt werden, während die Uhrzeit, die Jahreszeit oder das Datum auf verschiedene Art und Weise relevant sein können. So gibt es häufig von der Zeit im Jahr und/oder der Uhrzeit abhängige Preise (beispielsweise wird Strom nachts günstiger), aber gewisse Jahreszeiten schließen auch die Verwendung mancher Energiequellen zu bestimmten Uhrzeiten faktisch aus, beispielsweise im Bezug auf Sonnenenergie. Eine weitere insbesondere diesbezüglich zu nennende Information kann im Übrigen auch eine Wetterinformation sein, die häufig auch über das Internet erhaltbar ist und nicht zwangsläufig (allein) über Sensoren bestimmt werden muss.

Als Energiequelle kann dabei eine durch Verbrennung Wärme erzeugende Energiequelle vorgesehen sein, insbesondere können als mögliche Energiequellen Gas und/oder Öl und/oder Pellets und/oder Holz verwendet werden. Dies sind klassische Beheizungsarten, wie sie seit jeher bekannt sind und auch genutzt werden. Beispielsweise kann hierzu als Information der aktuelle Gaspreis und/oder der aktuelle Ölpreis und/oder der aktuelle Pelletpreis ermittelt werden. Insbesondere bezüglich der oben bereits erwähnten Ermittlung eines "Energiepreises" als Eignungswert, beispielsweise normiert auf Kilowattstunden, kann ein solcher Preis eines brennbaren Mediums leicht genutzt werden, da diese Medien am wenigsten von weiteren äußeren Umständen abhängig sind.

Als Wärmequelle kann ferner ein Heizstab vorgesehen werden, der über elektrischen Strom betrieben wird. Dieser elektrische Strom kann dabei jedoch aus verschiedenen Energiequellen resultieren, beispielsweise kann vorgesehen sein, dass als mögliche Energiequellen Windkraft und/oder Solarstrom und/oder Ein Blockheizkraftwerk und/oder aus einem gewerblichen Stromnetz bezogener Strom, insbesondere zum Antrieb wenigstens eines Heizstabes benutzt, verwendet werden. Es sei an dieser Stelle hervorgehoben, dass gerade in einem solchen Fall auch die Verwendung mehrerer Energiequellen sinnvoll sein kann und die letztliche Entscheidung für die Verwendung des Heizstabes unterstützen kann, beispielsweise, wenn bei der Beheizung eines Heizstabes recht günstiger Windkraftstrom oder Solarstrom zusätzlich zum aus dem gewerblichen Stromnetz bezogenen Strom genutzt werden können. In diesem Zusammenhang können zweckmäßigerweise als Information eine Tageszeit und/oder ein den aktuellen Wind beschreibender Wert und/oder ein aktueller Strompreis und/oder ein Sonnenstand und/oder eine Sonneneinstrahlung ermittelt werden. Die Tageszeit ist hierbei nicht nur für den Solarstrom relevant, sondern es ist häufig der Fall, dass nachts günstigerer Strom vorliegt, was die Heizung mit Strom aus einem gewerblichen Stromnetz als günstigste Alternative durchaus möglich macht.

Als Energiequelle können als weiteres Beispiel selbstverständlich auch erneuerbare Energien genutzt werden. Insbesondere kann vorgesehen sein, dass als mögliche Energiequelle wenigstens ein durch eine Wärmepumpe genutztes Wärmereservoir, insbesondere Luft und/oder ein Solekreis und/oder geothermische Energie und/oder Sonnenenergie, genutzt wird. Sonnenlicht kann beispielsweise auf dem Dach eines Wohngebäudes gesammelt und zur unmittelbaren Erwärmung des Heizmediums oder aber auch zur mittelbaren Erwärmung, beispielsweise über ein Öl, genutzt werden. Geothermische Energie kann beispielsweise durch Tiefenbohrungen angezapft werden, bei denen beispielsweise 70 m tief in das Erdreich vorgedrungen wird. Doch auch die Außenluft selbst kann als ein Wärmereservoir zum Betrieb einer Wärmepumpe dienen. In diesem Zusammenhang bietet es sich an, als aktuelle relevante Information eine Außentemperatur und/oder eine Temperatur des Wärmereservoirs und/oder eine Tageszeit und/oder einen Sonnenstand und/oder eine Sonneneinstrahlung zu ermitteln. Die genannten Informationen ermöglichen es letztlich festzustellen, ob das entsprechende Wärmereservoir einsatzbereit ist und in welchem Maße es zur Wärmeerzeugung beitragen kann.

Wie bereits erwähnt, kann zweckmäßigerweise vorgesehen sein, dass als Information weiterhin eine benötigte Heizenergie und/oder Heizleistung berücksichtigt wird. Damit kann nicht nur die Eignung einer Energiequelle bewertet werden, sondern es kann letztlich auch in einer Ausführungsform des erfindungsgemäßen Verfahrens ermittelt werden, wie viel Energie der Energiequelle benötigt wird, um die Wärme zu erzeugen, gegebenenfalls abhängig von der Temperaturdifferenz bei Wärmereservoiren, um dann mit einem jeweiligen "Preis" zu multiplizieren. Ersichtlich sind viele Möglichkeiten denkbar, zum erfindungsgemäßen Verfahren Kriterien, Bedingungen bzw. Eignungswerte zu realisieren, die eine Auswahl der geeignetsten Energiequelle ermöglichen.

In weiterer Ausgestaltung des erfindungsgemäßen Verfahrens kann auch vorgesehen sein, dass die Information und/oder die aktuell verwendete Energiequelle an einer Darstellungseinrichtung angezeigt und/oder über ein Netzwerk, insbesondere über das Internet, abgerufen wird. So hat der Benutzer die Möglichkeit, die aktuelle Energiequelle für seinen Heizungsbetrieb einzusehen, gegebenenfalls aber auch die Informationen, die zur Auswahl der Energiequelle führten. Insbesondere im Rahmen der Hausautomatisierung kann auch vorgesehen sein, dass diese Information über ein Netzwerk, insbesondere über das Internet, abgerufen wird, um beispielsweise weltweit verfügbar zu sein. Auch ein hausinternes Netzwerk ist jedoch denkbar, so dass beispielsweise eine PC-Software zur Darstellung und/oder Steuerung Informationen mit der Steuereinrichtung austauschen kann. Denn es ist insbesondere auch möglich, dass die Auswahl der Energiequelle durch einen Benutzer verändert wird. Hat beispielsweise ein Benutzer weitergehende Informationen oder stellt er fest, dass eine bestimmte Information fehlt, so kann er dennoch selbst in die grundsätzlich automatische Auswahl der Energiequelle eingreifen und diese modifizieren. Dies kann insbesondere auch über ein Netzwerk denkbar sein, insbesondere über das Internet weltweit.

Weiterhin kann vorgesehen sein, dass bei einer Nichtermittelbarkeit der und/oder einer Information eine Warnung an einen Benutzer ausgegeben wird. Diese Warnung kann beispielsweise an der Darstellungseinrichtung oder über andere Ausgabemittel, insbesondere auch akustische Ausgabemittel, erzeugt werden, oder über ein Netzwerk an eine PC-Software oder dergleichen weitergegeben werden, so dass ein Benutzer beispielsweise selber die Auswahl der Energiequelle tätigen kann oder auf ein Problem in der Ermittlung, beispielsweise eine fehlende Internetverbindung und/oder einen defekten Sensor, hingewiesen wird.

Neben dem Verfahren betrifft die vorliegende Erfindung auch eine Steuereinrichtung für eine Heizungsanlage, die über mehrere mögliche angeschlossene Energiequellen betreibbar ist, ausgebildet zur Ermittlung wenigstens einer aktuellen, für die Auswahl einer Energiequelle relevanten Information, daraus unter Berücksichtigung der Information wenigstens einer aktuell am besten geeigneten Energiequelle und zur Verwendung der am besten geeigneten Energiequelle. Letztlich ist die Steuereinrichtung (Controller) also dazu ausgebildet, das erfindungsgemäße Verfahren durchzuführen, so dass sich alle dort gemachten Ausführungen selbstverständlich genauso auf die Steuereinrichtung übertragen lassen. Die Steuereinrichtung wertet also die wenigstens eine aktuelle, für die Auswahl einer Energiequelle relevante Information aus, um eine am besten geeignete Energiequelle vollkommen automatisch zu bestimmen und zu verwenden, ohne dass noch ein Benutzereingriff erforderlich wäre.

Es sei an dieser Stelle noch angemerkt, dass sich die vorliegende Erfindung besonders vorteilhaft auch auf Heizungsanlagen mit wenigstens drei oder gar wenigstens vier Energiequellen anwenden lässt, da die Abschätzung grundsätzlich bei zunehmender Zahl von Energiequellen aufwändiger und komplexer werden kann, insbesondere, wenn sie durch einen Benutzer vorgenommen werden muss, der die nötigen Informationen ohnehin nicht oder nur schwer beschaffen kann. Mit dem erfindungsgemäßen Verfahren und der erfindungsgemäßen Steuereinrichtung können beliebig komplexe Kombinationen von Energiequellen und Informationen bearbeitet werden, beispielsweise können die Informationen, dass es außerhalb des Gebäudes kalt und dunkel ist, fossile Brennstoffe teuer sind und Strom günstig ist (Nacht) dazu führen, dass ein Heizstab verwendet wird, ausreichender Wind kann zur Nutzung von Windkraft führen usw.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: einen Ablaufplan des erfindungsgemäßen Verfahrens, und
- Fig. 2: eine Heizungsanlage mit mehreren Energiequellen.

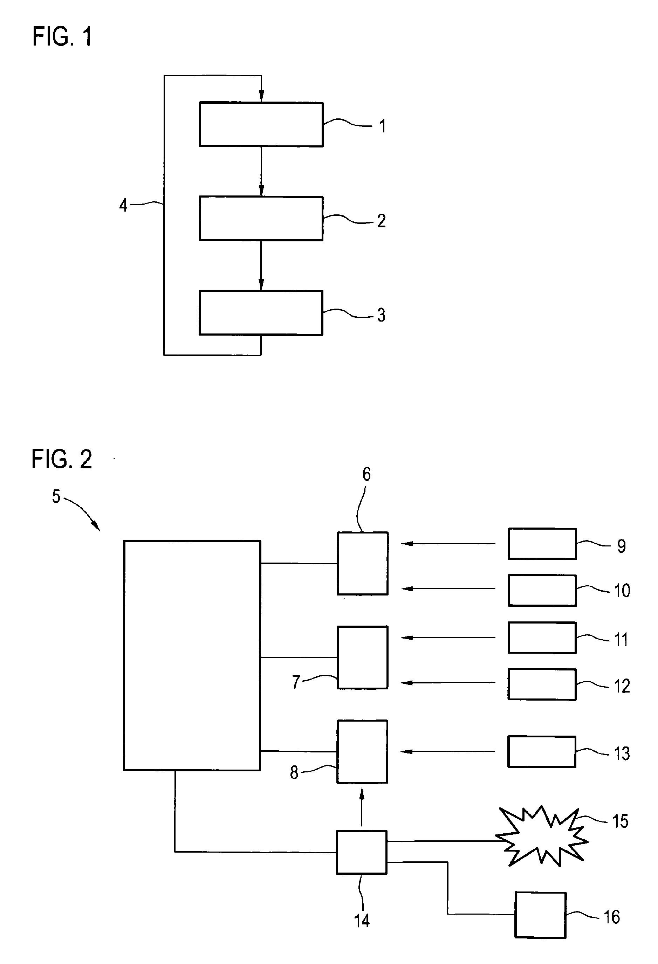

Fig. 1 zeigt einen Ablaufplan der wesentlichen Schritte des erfindungsgemäßen Verfahrens, welches zur Steuerung der Energiezufuhr einer Heizungsanlage mit mehreren möglichen angeschlossenen Energiequellen dient.

Dabei werden zunächst in einem Schritt 1 mehrere aktuelle, für die Auswahl einer Energiequelle relevante Informationen ermittelt, beispielsweise Energiepreise für die jeweilige Energiequelle, eine Zeit, Informationen über das Wetter, Messdaten von Sensoren und dergleichen.

Diese Informationen werden nun in einem Schritt 2 durch eine Steuereinrichtung der Heizungsanlage ausgewertet, indem verschiedene Kriterien, Formeln und Algorithmen berücksichtigt werden, um für jede Energiequelle einen Eignungswert zu ermitteln. Dabei kann es sich beispielsweise um einen "Energiepreis" handeln, der angibt, welche Kosten gerade zur Erzeugung einer Kilowattstunde an Wärmeenergie benötigt würden.

Anhand dieser Eignungswerte wird nun in einem Schritt 3 wenigstens eine am besten geeignete Energiequelle bestimmt, wobei auch mehrere Energiequellen gleichzeitig zur Erzeugung von Wärme genutzt werden können, soweit ihr Eignungswert einen Schwellwert überschreitet. Entsprechend wird die Heizungsanlage dann so angesteuert, dass die Energiezufuhr über die ermittelte am besten geeignete Energiequelle erfolgt.

Dieses Vorgehen wird, wie durch den Pfeil 4 angedeutet, zyklisch in kurzen Zeitabständen wiederholt, so dass überprüft werden kann, ob die verwendete Energiequelle noch immer die geeignetste ist.

Ein konkretes Beispiel des erfindungsgemäßen Verfahrens soll anhand der in Fig. 2 dargestellten Heizungsanlage 5 erläutert werden, wobei es sich um eine Heizungsanlage 5 für ein Wohngebäude handelt. Die benötigte Wärmeenergie der Heizungsanlage 5 kann dabei auf verschiedene Arten erzeugt werden, wozu ein Brenner 6, ein Heizstab 7 und eine Wärmepumpe 8 vorgesehen sind. Jedem der Wärmeerzeuger 6, 7, 8 ist wenigstens eine Energiequelle zugeordnet, die verwendet werden kann. Vorliegend können im Brenner 6 Gas 9 und Pellets 10 verbrannt werden, der Heizstab 7 kann mit Solarstrom 11 und/oder aus einem gewerblichen öffentlichen Netz stammenden Strom 12 erhitzt werden, die Wärmepumpe 8 nutzt die Außenluft 13.

Es sei an dieser Stelle angemerkt, dass selbstverständlich auch andere Konfigurationen und Wärmequellen denkbar sind. So kann Solarenergie auch direkt genutzt werden, es kann Windkraft verwendet werden, eine Tiefenbohrung kann vorgesehen sein und dergleichen.

Gesteuert wird die Heizungsanlage 5 über eine Steuereinrichtung 14, die zur Durchführung des erfindungsgemäßen Verfahrens ausgebildet ist.

Als Informationen können hier beispielsweise, entweder über das mit der Steuereinrichtung 14 in Verbindung stehende Internet 15, Sensoren 16, einen Zeitgeber oder auch durch Eingabe durch einen Benutzer, aktuelle Informationen, die für die Auswahl der am besten geeigneten Energiequelle relevant sind, ermittelt werden. Im vorliegenden Ausführungsbeispiel werden der aktuelle Gaspreis, gegebenenfalls zeitabhängig, der aktuelle Pelletpreis, gegebenenfalls zeitabhängig, der aktuelle Strompreis, gegebenenfalls zeitabhängig, der Sonnenstand/die Sonneneinstrahlung, die Außentemperatur und gegebenenfalls weitere Informationen bestimmt. Zudem wird auch der aktuelle Wärmebedarf berücksichtigt. Es ist nun vorgesehen, dass den einzelnen Energiequellen 9 - 13 Eignungswerte zugeordnet werden, wobei an dieser Stelle angemerkt sei, dass im vorliegenden Beispiel auch ein einziger Eignungswert für den Heizstab 7 ermittelt werden kann, der sich aus den Eignungswerten des Solarstroms 11 und des Netzstroms 12 ergibt, welche zweckmäßigerweise in Kombination zum Betreiben des Heizstabs 7 genutzt werden können.

Diese Eignungswerte sind im vorliegenden Fall "Energiepreise", die die aktuellen Kosten zur Erzeugung einer Kilowattstunde an Wärmeenergie angeben und somit gut vergleichbar sind. Es sei darauf hingewiesen, dass nicht nur die Kosteneffizienz hier im Vordergrund stehen kann, sondern auch zusätzlich oder alternativ andere Kriterien, beispielsweise Umweltschutzkriterien, berücksichtigt werden können.

Nach einer Analyse der sich ergebenden Eignungswerte wird festgelegt, ob nur eine einzige Energiequelle genutzt werden soll oder mehrere Energiequellen in Kombination den Wärmebedarf decken sollen. Herrscht z. B. Sonnenschein bei einem hohen Sonnenstand, also guter Sonneneinstrahlung, kann vorgesehen werden, dass allein der Solarstrom 11 zum Heizen genutzt wird. Ähnlich kann beispielsweise des Nachts bei einem günstigen Gaspreis lediglich Gas 9 angewandt werden. Wird jedoch nachts der Netzstrom 12 günstiger, kann es sinnvoll sein, gänzlich oder teilweise den durch Netzstrom 12 betriebenen Heizstab 7 zu nutzen. Beliebig komplexe Ansteuerungen, die immer die geeignetsten Energiequellen verwenden, sind folglich denkbar.

Nach Ermittlung der am besten geeigneten Energiequelle steuert die Steuereinrichtung 14 die Heizungsanlage 5 entsprechend an.

Es sei schließlich noch darauf hingewiesen, dass auch eine Interaktion mit einem Benutzer durchaus möglich und vorteilhaft vorgesehen sein kann. So kann eine Darstellungseinrichtung, beispielsweise an der Steuereinrichtung, vorgesehen sein, wo der aktuelle Status, insbesondere die verwendete Energiequelle, angezeigt wird. Selbstverständlich ist auch die Verbreitung von Daten über das Netzwerk denkbar, beispielsweise an einer PC-Software, die mit der Steuerung der Heizungsanlage betraut ist. Auch ein Austausch von Daten über das Internet, beispielsweise weltweit über eine Hausautomatisierung, ist denkbar, wobei dem Benutzer selbstverständlich auch Interaktionsmöglichkeiten gegeben werden können, so dass er selbst in die Steuerung und die Auswahl der Energiequelle eingreifen kann und gegebenenfalls eine andere Auswahl treffen kann. Auf solchem Wege können einem Benutzer auch Warnungen übermittelt werden, wenn beispielsweise die Informationsermittlung fehlschlägt oder gerade nicht möglich ist.

## Patentansprüche

1. Verfahren zur Steuerung der Energiezufuhr einer Heizungsanlage mit mehreren möglichen angeschlossenen Energiequellen, wobei wenigstens eine aktuelle, für die Auswahl einer Energiequelle relevante Information ermittelt wird, wonach unter Berücksichtigung der Information wenigstens eine aktuell am besten geeignete Energiequelle ermittelt und verwendet wird.

2. Verfahren nach Anspruch 1, **dadurch gekennzeichnet, dass** die am besten geeignete Energiequelle durch eine hierarchische Abarbeitung von wenigstens eine Information auswertenden Bedingungen ermittelt wird.

3. Verfahren nach Anspruch 1, **dadurch gekennzeichnet, dass** im Rahmen eines Bewertungssystems unter Berücksichtigung der Information für jede Energiequelle ein Eignungswert ermittelt wird und die am besten geeignete Energiequelle anhand der Eignungswerte bestimmt wird.

4. Verfahren nach Anspruch 3, **dadurch gekennzeichnet, dass** bei Ermittlung und gleichzeitiger Verwendung mehrerer Energiequellen deren Anteil an der Heizleistung anhand des Eignungswerts bestimmt wird, wobei insbesondere nur Energiequellen mit einem einen Schwellwert überschreitenden Eignungswert verwendet werden.

5. Verfahren nach einem der vorangehenden Ansprüche, **dadurch gekennzeichnet, dass** die Information im Hinblick auf wenigstens ein Eignungskriterium ausgewertet wird, insbesondere ein Kostenkriterium und/oder ein Umweltfreundlichkeitskriterium.

6. Verfahren nach Anspruch 5, **dadurch gekennzeichnet, dass** bei Verwendung mehrerer Kriterien eine Wichtung oder Priorität der Kriterien berücksichtigt wird.

7. Verfahren nach einem der vorangehenden Ansprüche, **dadurch gekennzeichnet, dass** die Ermittlung zyklisch wiederholt wird.

8. Verfahren nach einem der vorangehenden Ansprüche, **dadurch gekennzeichnet, dass** als Information ein die Kosten einer Energiequelle beschreibender Preis, insbesondere zeitabhängig, und/oder eine Zeit, insbesondere eine Uhrzeit, und/oder Messwerte von Sensoren ermittelt werden.

9. Verfahren nach einem der vorangehenden Ansprüche, **dadurch gekennzeichnet, dass** als mögliche Energiequellen Gas und/oder Öl und/oder Pellets und/oder Holz verwendet werden, wobei insbesondere als Information der aktuelle Gaspreis und/oder der aktuelle Ölpreis und/oder der aktuelle Pelletpreis ermittelt werden.

10. Verfahren nach einem der vorangehenden Ansprüche, **dadurch gekennzeichnet, dass** als mögliche Energiequellen Windkraft und/oder Solarstrom und/oder ein Blockheizkraftwerk und/oder aus einem gewerblichen Stromnetz bezogener Strom, insbesondere zum Antrieb wenigstens eines Heizstabes benutzt, verwendet werden, wobei insbesondere als Information eine Tageszeit und/oder ein den aktuellen Wind beschreibender Wert und/oder ein aktueller Strompreis und/oder ein Sonnenstand und/oder eine Sonneneinstrahlung ermittelt werden.

11. Verfahren nach einem der vorangehenden Ansprüche, **dadurch gekennzeichnet, dass** als mögliche Energiequelle wenigstens ein durch eine Wärmepumpe genutztes Wärmereservoir, insbesondere Luft und/oder ein Solekreis und/oder geothermische Energie und/oder Sonnenenergie, genutzt wird, wobei insbesondere als Information eine Außentemperatur und/oder eine Temperatur des Wärmereservoirs und/oder eine Tageszeit und/oder ein Sonnenstand und/oder eine Sonneneinstrahlung ermittelt werden.

12. Verfahren nach einem der vorangehenden Ansprüche, **dadurch gekennzeichnet, dass** als Information weiterhin eine benötigte Heizenergie und/oder Heizleistung berücksichtigt wird.

13. Verfahren nach einem der vorangehenden Ansprüche, **dadurch gekennzeichnet, dass** die oder wenigstens eine Informationen über das Internet und/oder eine GPRS-Verbindung ermittelt wird.

14. Verfahren nach einem der vorangehenden Ansprüche, **dadurch gekennzeichnet, dass** die Information und/oder die aktuell verwendete Energiequelle an einer Darstellungseinrichtung angezeigt und/oder über ein Netzwerk, insbesondere über das Internet, abgerufen wird, wobei vorzugsweise die Auswahl der Energiequelle durch einen Benutzer verändert wird.

15. Verfahren nach einem der vorangehenden Ansprüche, **dadurch gekennzeichnet, dass** bei einer Nichtermittelbarkeit der und/oder einer Information einen Warnung an einen Benutzer ausgegeben wird.

16. Steuereinrichtung (14) für eine Heizungsanlage (5), die über mehrere mögliche angeschlossene Energiequellen betreibbar ist, ausgebildet zur Ermittlung einer aktuellen, für die Auswahl einer Energiequelle relevanten Information, daraus unter Berücksichtigung der Information wenigstens einer aktuell am besten geeigneten Energiequelle und zur Verwendung der am besten geeigneten Energiequelle, insbesondere ausgebildet zur Durchführung des Verfahrens nach einem der Ansprüche 2 bis 15.
